Europäisches Patentamt

European Patent Office

Office européen des brevets

(11) Publication number: **0 364 090**
**A2**

# EUROPEAN PATENT APPLICATION

(21) Application number: **89308473.1**

(22) Date of filing: **21.08.89**

(51) Int. Cl.⁵: **G06F 15/20**

The title of the invention has been amended (Guidelines for Examination in the EPO, A-III, 7.3).

(30) Priority: **26.08.88 US 237265**

(43) Date of publication of application:
**18.04.90 Bulletin 90/16**

(84) Designated Contracting States:
**DE FR GB IT**

(71) Applicant: **AMERICAN TELEPHONE AND TELEGRAPH COMPANY**
**550 Madison Avenue**
**New York, NY 10022(US)**

(72) Inventor: **Freedman, Barry A.**
**204 Yale Drive**
**Lincroft New Jersey 07738(US)**
Inventor: **Ikura, Yoshiro**
**3 Wagner Court**
**Holmdel New Jersey 07733(US)**
Inventor: **Saigal, Romesh**
**2640 Parkridge Drive**
**Ann Arbor Michigan 48103(US)**

(74) Representative: **Watts, Christopher Malcolm Kelway et al**
**AT&T (UK) LTD. AT&T Intellectual Property Division 5 Mornington Road**
**Woodford Green Essex IG8 OTU(GB)**

(54) **Method and apparatus for efficient resource allocation.**

(57) A method for optimizing resource allocations in commercial enterprises that are characterized by a linear set of constraint relationships of the controllable parameters. The method is particularly useful in enterprises where the cost function to be minimized is piece-wise linear and convex, or where the cost function is linear and the constraint relationships are such that the enterprise can conveniently be decomposed into a plurality of relatively independent subentities and a correlating portion that expresses the interrelationships among the subentities. More specifically, in accordance with the disclosed method, an enterprise with a linear system of constraint equations that can be decomposed into a master problem and a plurality of subproblems leads to a need to solve a system of equations (corresponding to the master problem) where the cost function is piece-wise linear and convex. The piece-wise linear problem is solved by a method that is a modification of the algorithm invented by Karmarkar. The method moves iteratively within the polytope of feasible solutions (as in Karmarkar's invention) in a move direction that improves the value of the cost function. The move direction is ascertained scaling of the problem and determining a descent direction through a sensitivity vector evaluation, and the step size is determined through a line search along chosen direction to the best set of allocation values along that direction. Whenever possible, that direction corresponds to the steepest descent direction. The iterations are repeated until an optimal solution is found, whereupon the last evaluated set of allocations (controllable parameters of the system) is communicated to the system.

# METHODS AND APPARATUS FOR EFFICIENT RESOURCE ALLOCATION BY INTERIOR RESOURCE-DIRECTIVE DECOMPOSITION

## Background of the Invention

This invention relates to systems for resource allocation among a plurality of resource utilizers and, more particularly, to a method and apparatus for selecting a beneficial resource allocation arrangement in a system that comprises a number of related subsystems, where each of the subsystems comprises a large number of interrelated operating parameters that affect the efficiency of the overall resource allocation arrangement.

The need for resource allocation and optimization of systems arises in a broad range of industrial and technological areas, such as assignment of transmission facilities in telephone transmission systems, the control of the product mix of a factory, the deployment of industrial equipment, inventory control, and scheduling of crew members in service industry. Resources allocation in this context means, in general, the deployment of specific technological or industrial resources for the production of particular technological or industrial results. The goal of resource allocation is to obtain the optimal usage of the resources.

Resource allocation and optimization decisions are typically subject to certain constraints on the controllable parameters of the system being optimized. Resources are often limited in availability, and moreover, their usefulness in a particular application may also be limited. For example, the traffic-carrying capacity of each individual link in a telecommunications system is limited, while the overall traffic offered to the communications system is also limited. Thus, having a less than necessary capacity at a particular link may be a limiting factor for the overall performance of the system. However, having more than enough capacity at one link may be wasteful as well. Each particular allocation of resources can be associated with a "payoff," i.e., an allocation benefit or a cost. The problem, then, is to allocate the resources so as to satisfy all of the constraints and, simultaneously, to maximize the payoff, or minimize the total cost.

One method of representing such resource allocation problems is called a linear programming model. Such a model consists of a number of linear expressions that represent the quantitative relationships among allocations, constraints and payoffs. An expression is said to be linear if it is the sum of constant coefficients multiplied by unknown allocation values. Many resources allocation problems, of course, cannot be represented by such linear expressions, but involve higher powers of the unknowns or other nonlinearities in the relationships. Such systems are not susceptible to linear programming approaches. Still, application of linear programming models have been popular in industries due to its simplicity and relatively wide applicability. For example, linear programming models have been used to help design telephone systems, to optimally schedule airline crew activities or to efficiently control petrochemical processes.

A linear programming problem is formulated by a set of linear equations, where the controllable parameters of the system are the unknown variables, plus a linear relationship to represent the payoff. The set of linear equations are called constraints, and the payoff term is called an objective function. The set of linear equations can also be expressed by way of a constraint matrix and a right-hand side vector. Still another way to express the linear equations is visually, by viewing each of the controllable parameters as a separate dimension in a multi-dimensional space. In such a space, the set of feasible solutions to the linear equations that model the system to be optimized is a multidimensional geometric shape - a polyhedron with a surface that is created by multi-sided planes or "polygons", one for each of the constraint relationships of the system. Since there may be many thousands and perhaps even millions of such constraint equations, the number of faces of such a polyhedron is correspondingly very large. This polyhedron, which is technically termed a "polytope," is thus an organized visual representation of the problem's constraints.

It has been known that the optimal solutions to any linear programming problem must lie at one of the corners of the polytope, which we call vertices. Algorithms to solve a linear programming problem follow a path from a point to a point of the feasible polytope, either on its surface or inside. Each step of an algorithm is a process to find a path from one point to another in the polytope, while improving the payoff value. The algorithm terminates if the point is optimal, or at least is sufficiently close to an optimal one.

Application of linear programming techniques have been expanded rapidly due to breakthroughs and advancement of computer technology. Problems, which were previously considered intractable, can now be solved provided enough computing resources are available. In particular, recent invention by N. K. Karmarkar, described in the article entitled "A New Polynomial-Time Algorithm for Linear Programming," *Combinatorica* 4(4), pp. 373-395, 1984, expedites the process of finding an optimal allocation of resources for linear programming problems. The older Simplex algorithm, which has been the standard way to solve linear programming problems for decades, proceeds on the surface of the constraint polytope from vertex to. vertex. The Karmarkar invention, on the other hand, begins in the interior of the constraint polytope and proceeds in radial steps to an optimal vertex. Because of the radial nature of successive steps, far fewer steps are required to reach the optimal vertex and hence the Karmarkar invention presents the possibility of being much faster than the Simplex algorithm, particularly for large-sized problems.

Although this is an impressive accomplishment, many practical decision problems still lead to formulations that greatly exceed the current computational limit of the straightforward application of linear programming techniques, including the Karmarkar method. To name a few examples of such large-scale linear programs are telecommunication network management, transportation and inventory control, production scheduling for manufacturing, and financial planning problems. These problems usually represent decision making processes over multi periods or multi regions, where decision variables are interrelated from a period to another period, or from a region to another region and thus making the problems very large and complex.

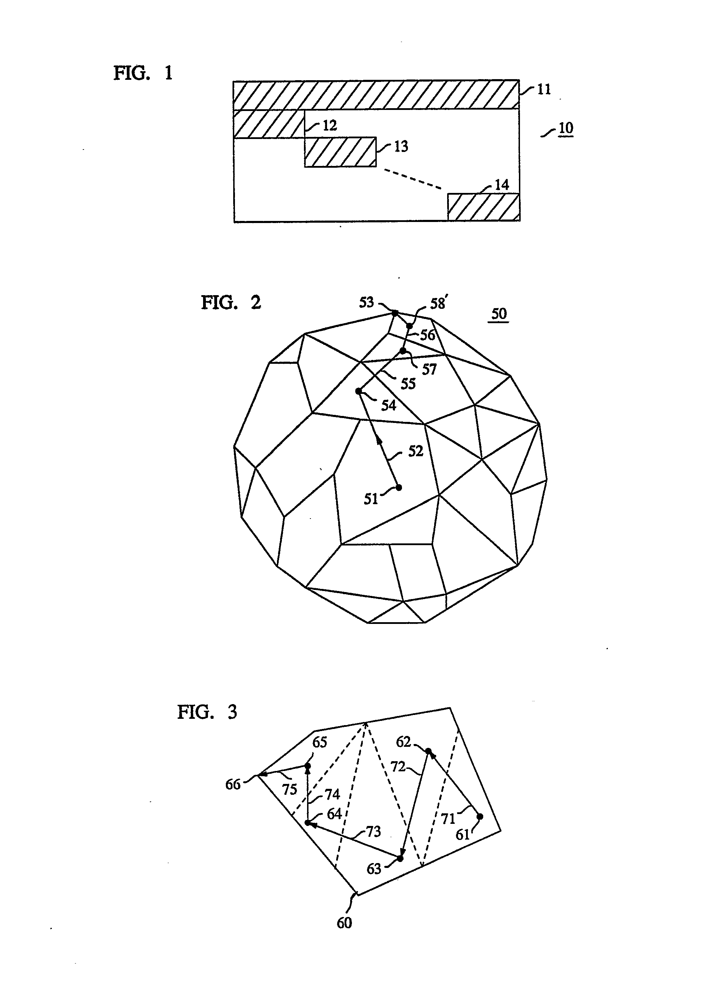

A conspicuous feature of such large-scale problems is that they share similar special structures in the constraint matrices, and it is the similarities that form the key to any hope to tackle them in practice. Examples of such special structures are block angular, and staircase submatrices illustrated in FIG. 1. FIG. 1 shows the constraint matrix in the form of a rectangle 10. The collection of rows in the matrix that contain non-zero terms in most of the columns is depicted by shaded block 11, and the sections that are characterized by the fact that they contain at least one non-zero term in each of the columns are depicted by shaded block 12, 13, and 14. This illustrative technique is the common method for showing the inherent structure of a matrix, as can be observed from the Figures on page 506 in "Applied Mathematical Programming," Bradley, et al., Addison-Wesley, 1977.

It may be observed that shaded areas 12-14 each represent the constraint relationships within different subsystems, where the parameters that can be controlled are highly interrelated. The shaded area 11 corresponds to the constraint relationships resulting from the interrelationships between the subsystems.

Various decomposition approaches are available in the prior art to solve such large-scale problems by taking advantage of the special structures.

One of the well-known algorithms for decomposition is the column-generation method by G. B. Dantizg and P. Wolfe, as described in "The Decomposition Algorithm for Linear Programming," *Econometrica* 29-(4), pp. 767-778, 1961. Their method is also referred to as the "price-directive decomposition" method.

The idea of the column-generation method is to generate necessary columns only when needed as the algorithm proceeds. The algorithm starts with a much smaller problem than the original, and keeps a small solution set. In each iteration, a column of the original constraint matrix is generated and included in the working solution set, provided that an efficient column generating scheme is available to select a good candidate. Since the number of candidate columns is enormous in general, the speed of the method depends on how fast one can find a good candidate. Moreover, a large number of columns have to be generated before the algorithm terminates. These drawbacks cause the column-generation methods to be slow in general.

Another decomposition approach that was developed is described by A. M. Geoffrion in "Primal Resource-directive Approaches for Optimizing Nonlinear Decomposable Systems," *Operations Research* 18, 1970. The basic concept of resource-directive decomposition is to decompose the problem into a plurality of subproblems and into a "master" problem into which some attributes of the subproblems are included in the objective function. The original problem is then solved by iteratively assigning resources to the various subproblems, solving the subproblems independently, passing the solutions to the master problem and solving that problem. The solution of the master problem, at each iteration, provides new resource assignments to the subproblems, for the following iteration.

The above decomposition approach has two distinct advantages over the straightforward application of general linear programming techniques. The first is that after decomposing the problem into subproblems, one does not have to solve the large original problem directly. The second is that the subproblems are, in general, specialized linear programming problems so that one can take advantage of the specialized efficient methods to solve them. For example, Network Simplex algorithms have been implemented using efficient graphical data structures, and it has been reported (by F. Glover, et al. "Implementation and Computational Comparisons of Primal, Dual, and Primal-Dual Computer Codes for Minimum Cost Network Flow Problems," *Networks* Vol. 4 pp. 191-212, 1974) that one can solve so-called network flow linear programming problems with a specialized simplex method hundreds times faster than with the conventional simplex method.

The major shortcoming of the resource-directive decomposition methods is that one is faced with a non-linear optimization problem in trying to solve the master problem. The source for this non-linearity comes from the inclusion of attributes of the subproblems in the objective function of the master problem.

## Summary of the Invention

In accordance with the principles of my invention, the non-linear master problem is solved by a method that is a modification of the algorithm invented by Karmarkar. Specifically, it is observed that the new objective function, though non-linear, is a piece-wise linear convex function which is a function that is derived from the solutions to the subproblems. Described in diagrammatic terms, my method follows the principles disclosed by Karmarkar's invention in that the process stays inside the polytope which defines the master problem. After finding an initial feasible point, or set of allocations, Karmarkar's method employs scaling and projection to center the operating point in the "working space" and find a move direction from that point that improves the value of the cost function most quickly. Such a direction is commonly referred to as the "steepest descent" direction. However, whereas in accordance with the Karmarkar method one may move almost to the wall of the polytope before recentering and reevaluating the appropriate descent direction, my modified method performs a line search along the descent direction and moves to the best set of allocation values along that direction. Whenever possible, that direction corresponds to the steepest descent direction. More particularly, the set of allocation values that is accepted at each iteration is the least costly set of values of allocation values along the line search that either approaches a wall of the polytope to some chosen proportional distance away from the wall (e.g. .97 of the distance to the wall), or the set of allocations beyond which the cost begins to increase. The iterations are repeated until an optimal solution is found.

Because the constraint matrix in the master problem is almost always substantially smaller than the matrix defining the overall original problem, the "Karmarkar steps" associated with my method take relatively short time to evaluate (because the matrix to be inverted is smaller). The line search process is also efficient because specialized linear programming techniques are available. The result is that my process offers a very fast solution to systems that either have an objective function that is piece-wise linear convex, or have a linear objective function but are such that they can be judiciously decomposed into subproblems and a master problem.

## Brief Description of the Drawing

FIG. 1 is a graphical representation of a matrix with the block-angular structure, where shaded areas indicate the submatrices of non-zero entries;

FIG. 2 is a graphical representation of the Karmarkar method for determining optimum resource allocations in linear programming models;

FIG. 3 is a graphical representation of the iterative steps of the invention, where the polytope contains regions of different descend directions;

FIG. 4 is a flow chart of the process steps of this invention to solve efficiently the linear programming problems with special structures; and

FIG. 5 is a flow chart of the process step of this invention as applied to optimizing piece-wise linear systems.

## Detailed Description

As indicated above, there exist tasks for efficient resource allocation in commercial enterprises which, as a unit, are too large to handle conveniently but which can be decomposed into a collection of independent subproblems, and a master problem that effectively combines the subproblems. It turns out that in such an arrangement the master problem is a piece-wise linear problem (to wit, possesses a piece-wise linear convex objective function and linear constraints), and such a problem can not be handled directly by the Karmarkar method. However, in accordance with my invention, a modified Karmarkar approach can be employed to solve any piece-wise linear problem. Therefore, in accordance with the principles of my invention, systems whose operations are modeled by a set of piece-wise linear equations or whose operations are modeled by a set of linear equations that can be decomposed into a collection of independent subproblems and a master problem, can be optimized in their operations. Specifically, the procedure of my invention proceeds along the following steps in solving the piece-wise linear problem:

1. Collect information about the system to be optimized, and specifically, the parameters that are controllable, the constraints that relate to the system, and the objective function whose value is to be minimized;

2. Determine the state of resource allocations of the system whose resource allocations are to be optimized;

3. Ascertain a direction of descent in the cost through an affine scaling approach;

4. Proceed in the ascertained direction to a point in the polytope (set of allocations) until either a wall of the polytope is approached or until the payoff no longer improves (the cost stops diminishing).

5. Select that point as the next state of resource allocations of the system and return to step 2, unless this next position is close enough to the final solution to warrant stopping the iterative process.

The procedure of my invention, of course, must take account of the specific nature of the resource allocation task at hand, and to that end the problem must be expressed in some useful form. In accordance with the standard approach in the art, the parameters that are controllable are represented by mathematical symbols (variables) and the relationships of the system to be optimized are expressed as equations that relate those variables. Other equations are derived from the original equations and those equations are then evaluated. The values for the parameters that are thus obtained are finally related to the physical controllable parameters to effect the desired resource allocation.

The relationships of the system and the equations that are derived from the original equations which help specify the steps of my procedure in quantative terms are presented below in formal mathematical terms.

Mathematical Underpinnings

With reference to FIG. 2, and in accordance with the Karmarkar algorithm, disclosed and claimed in United States Patent No. 4,744,028, on May 10, 1988, a starting point 51, located in the interior of polytope 50, is selected. The Karmarkar algorithm proceeds radially, entirely in the interior of polytope 50, in steps 52, 55, 56, ... to successive points 54, et cetera, each closer to optimum point 53. Since the Karmarkar algorithm proceeds radially in the interior of polytope 50, instead of circumferentially on the surface, from vertex to vertex, as does the Simplex algorithm, the Karmarkar algorithm is inherently faster because it requires many fewer steps, particularly for large systems.

The formal statement of a linear programming model takes the form of an objective function which is to be maximized or minimized, and a plurality of constraint relationships which express the physical constraints on acceptable allocations. These constraints correspond to and represent, as accurately as possible, the actual physical constraints present in the physical system.

In the context of this disclosure, the linear programming model that is considered is one which possesses special structures representing a plurality of subsystems in the model. The subsystems have their own allocation values and constraint relationships which are independent from other subsystems. In addition, subsystem's allocation values are constrained by the overall global relationships which represent intercorrelation among the subsystems. Thus, there are two levels of constraints: local ones for each subsystem, and global ones for the entire system. The model and the procedure for deriving the optimized resource allocations is expressed below in standard vector notation.

The goal can be stated formally by the following statement: find vectors $x_i$ and $y_i$ for $i = 1,...,k$, where $i$ designates the subproblem, or subsystem of the enterprise whose resources are to be allocated, to

$$\text{minimize} \ \sum_{i=1}^{k} c_i^t x_i \qquad (1)$$

where

$$\sum_{i=1}^{k} A_i y_i = b,$$

and

$E_i x_i = y_i$, for all $i$

$x_i, y_i \geq 0$, for all $i$

where $c_i$ is a vector of cost coefficients for subsystem $i$, $c_i^t$ is the transpose of vector $c_i$, $x_i$ and $y_i$ are vectors of allocation values for subsystem $i$, $k$ is the number of subsystems contained in the overall enterprise, $A_i$ is an $m$ by $n_i$ matrix of constant coefficient describing the parameter relationships within the $i^{th}$ subsystem, $n_i$ is the number of allocation values in subsystem $i$, $b$ is a vector of $m$ constraint limits, and $E_i$ is the constraint matrix for the subsystem $i$. More explicitly, the vector $y_i$ represents the allocation of resources given to subsystem i somewhat akin to the resources (e.g., budget) that a Government allocates to a Department. The $x_i$ vector describes the allocation of the given resources within the subsystem i (such as the distribution of a budget), and the expression $E_i x_i = y_i$ describes the relationship between $x_i$ and $y_i$ in terms of the constraints expressed by the matrix $E_i$ (such as the constraints within a Department).

The above problem can be reformulated in the following manner.

$$\text{minimize} \quad h(y_1, \ldots, y_k) = \sum_{i=1}^{k} v_i(y_i) \qquad (2)$$

where

$$\sum_{i=1}^{k} A_i y_i = b,$$

$$y_i \geq 0, \quad \text{for all } i$$

and where

$v_i(y_i) = \text{minimum } \{c_i^t x_i \text{ subject to } E_i x_i = y_i, x_i \geq 0\}.$  (3)

It can be shown that the function $v_i(y_i)$ is convex, and so is the function $h(y_1,...,y_k)$.

As indicated above, the very first step in my process is to find an initial feasible solution for the allocation task. In systems that are not in existence and are therefore not operational, where a design of the system is undertaken and where it is essential that the system be constructed in the most optimum manner *ab initio,* the problem of finding an initial feasible state may be formidable. Such a situation may occur, for example, when undersea cables are laid to form a telecommunications network. Clearly, in such a situation one would wish to optimize the undersea network before laying the cables. Fortunately, the invention by Vanderbei disclosed in United States Patent No. 4,744,026 granted on May 10, 1988, entitled "Methods and Apparatus for Efficient Resource Allocation," provides a means for determining an initial feasible point. In many other applications, on the other hand, the resource allocation task is sought to be applied to an existing enterprise. There, the initial feasible point simply may be the existing state of the enterprise; and that state, being the initial or first state in the optimization iterations, is designated $y^1$.

In accordance with my process, for a given set of allocations specified by $y^1$, which consists of components $y_1^1$, $y_2^1$, ... $y_i^1$, ... $y_k^1$, the function $h(y_1^1, ..., y_k^1)$ is evaluated by evaluating the various $v_i(y_i^1)$. That is, given the initial solution of the master problem and the allocations to the various subsystems, the initial solution of the allocations within the subsystems, $v_i(y_i^1)$, must be derived. The process of evaluating individual $v_i(y_i^1)$ is accomplished by solving the linear programming problem expressed by equation (3) for a given value of $y_i^1$. In general, to solve such a subproblem we can use the standard Simplex Algorithm described by G. B. Dantzig, "Linear Programming and Extentions," Princeton University Press, 1963, if there is no specialized algorithm to solve each subproblem. If the subproblem is a specialized linear programming model, such as a network flow or transportation problem, efficient special algorithms can be used. For example, Network Simplex Algorithm described by J. L. Kennington and R. V. Helgason, "Algorithms for Network Programming", Wiley, 1980, is used to solve the network flow or transportation subproblems.

The optimal solution for each $v_1(y_i^1)$ is expressed by a matrix $B_i^1$, which is a square sub-matrix of the original constraint matrix $E_i$, such that

$B_i^1 x_{B_i}^1 = y_i.$

This matrix $(B_i)$ is sometimes referred to as the canonical basis matrix. It is composed of the columns of $E_i$ which form a set that is both necessary and sufficient to define the state of optimal allocation values. With the basis $B_i^1$, the optimal resource allocation values $x_i^1$ (sometimes called "primal" values) and the optimal "dual" values $d_i$ can be expressed by:

$x_{B_i}^1 = (B_i^1)^{-1} y_i^1, x_{N_i}^1 = 0,$

and

$d_i^1 = (c_{B_i})^t (B_i^1)^{-1}$  (4)

where $c_{B_i}$ is a part of the vector $c_i$ including the only components of basic resource allocation values which corresponds to the columns of $B_i^1$, and $x_i^1 = (x_{B_i}^1, x_{N_i}^1)$. The superscript t, again, represents the transpose of a vector (or matrix), and $E_i = [B_i N_i]$.

This completes the step of ascertaining an set of initial allocations in the master problem and the set of initial allocations in the subproblems. The rest of the algorithm is described as an iterative process of moving from one set of allocation values to another. For clarity of description of the process, it is assumed that the set of present allocation values $x_i^j$ and $y_i^j$ for $i = 1,...,k$ is known. The process to move the allocation values to the next values $x_i^{j+1}$ and $y_i^{j+1}$ for $i = 1,...,k$ is described. Such an iterative process is repeated for $j = 1,2,...$, until the set of optimal (or near optimal) allocation values is found. After the initial process described above, we have the allocation values of $x_i^j$ and $y_i^j$ for $i = 1,..., k$.

The dual values $d_i^j$ are used to calculate the direction of move $z_i^j$ in the iterative steps. Such a direction is also called the descent direction since the move in the direction reduces the cost. The direction $z_i^j$ of the step is given by the vector:

$$z_i^j = D_i^j P_i^j D_i^j d_i^j \qquad (5)$$

where

$D_i^j$ = diagonal matrix with components of $y_i^j$ , and

$$P_i^j = I_i - D_i^j A_i^t \{ \sum_{i=1}^{k} A_i (D_i^j)^2 A_i^t \}^{-1} A_i D_i^j,$$

Also, the dual vector for the master problem, $w^j$ is defined as:

$$w^j = \{ \sum_{i=1}^{k} A_i (D_i^j)^2 A_i^t \}^{-1} \sum_{i=1}^{k} A_i (D_i^j)^2 d_i^j. \qquad (6)$$

If the magnitude of the vector $z_i^j$ is sufficiently small and the dual vector $w^j$ satisfies the feasibility constraints, it is concluded that the current allocation values are close to the optimal ones. Thus, the stopping criteria of my process is:

Stop if $| z_i^j | \leq \epsilon_1$ and
$$A_i^t w^j \leq c_i + \epsilon_2, \qquad (7)$$

for all $i$, for sufficiently small positive values of $\epsilon_1$ and $\epsilon_2$. If the stopping criteria is not met, the process moves to a different set of allocation values, with the direction of the move given by the vector $-z^j$. As an aside, in some exceptional circumstances, when the allocation point is set exactly at a border point between regions of the objective function (see FIG. 3), there is no clear derivative at that point and, therefore, $-z^j$ may not be a descent direction. In such an unusual circumstance, a pertubation in the allocation point would bring the point into one or the other region of the objective function.

While vector $-z^j$ provides the direction of move, the step size is determined by performing a line search operation along the one-dimensional line defined by $-z^j$.

That is, because the objective function is piece-wise linear, the polytope can be segmented into portions where within each portion a particular linear segment of the objective function is operative (applies). It is clear, therefore, that one can proceed within the polytope in the direction specified by the vector $-z^j$ as long as one remains in the current linear portion (and, of course, as long as one remains within the polytope). In accordance with my invention, however, one can continue further, into a next polytope segment because the cost may continue to diminish, though at a different rate.

In the line search process, we solve the following one-dimensional optimization problem, solving for the scalar $\alpha$, ranging from 0 to $\bar{\alpha}^j$ that minimizes:

$h(y^j - \alpha z^j), \qquad (8)$

where $y^j = (y_1^j ,...,y_k^j )$, $z^j = (z_1^j ,...,z_k^j )$, and

$$\bar{\alpha}^j = \underset{q \text{ such that } (z_i^j)_q > 0}{\text{Max}} \frac{(y_i^j)_q}{(z_i^j)_q} .$$

The line search process is done by the standard Dual Simplex Algorithm described in G. B. Dantzig, "Linear Programming and Extensions." Specialized efficient Dual Simplex Algorithms are also available for transportation and network flow problems, as in Y. Ikura, G. L. Nemhauser, "Computational Experience with a Polynomial-time Dual Simplex Algorithm for the Transportation Problem," *Discrete Applied Mathematics,* Vol No. 13, pp. 239-248, 1986, and A. Nakayama, "A Polynomial-time Dual Simplex Algorithm for the Minimum Cost Flow Problem," *Journal of the Operations Research Society of Japan*, Vol. 30, No. 3, pp. 265-290, 1987. While the line search process is performed, the resource allocation values, $x_i^j$, are updated.

When the solution of the line search, $\tilde{\alpha}^j$, is found, then the new set of allocation values is defined by

$$y^{j+1} = y^j - \tilde{\alpha}^j z^j. \qquad (9)$$

After this update of the allocation values, the process of finding the move direction is repeated, the magnitude of $z^j$ vector and feasibility of the $w^j$ vector is checked, and a move to another allocation is effected, if it is called for.

## The Process

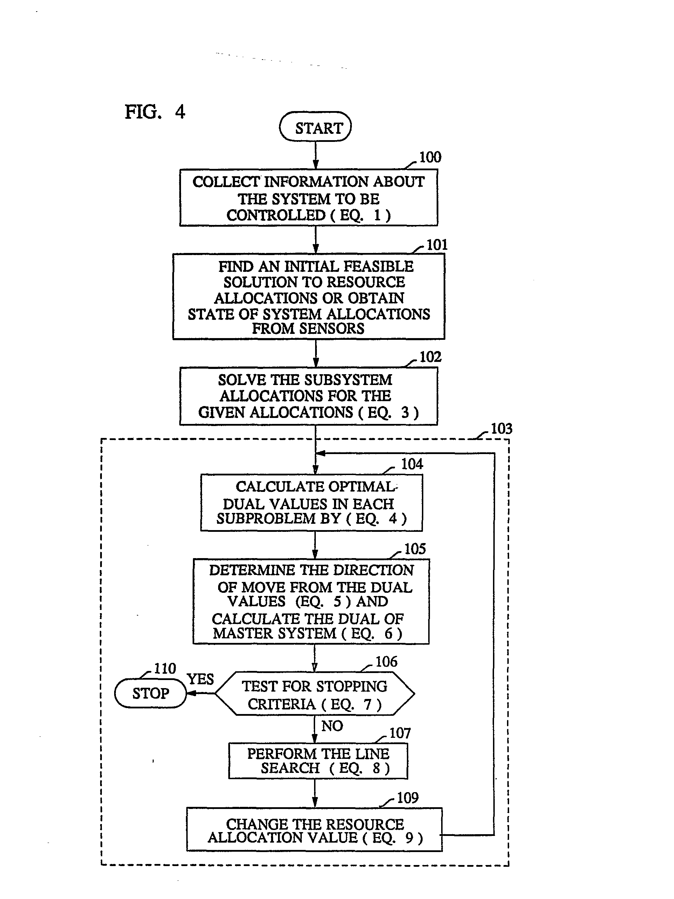

A flowchart of the iterative steps are depicted in FIG. 4 of the drawings. As shown in FIG. 4, it is first necessary to identify the parameters of the enterprise that are controllable, formulate the linear programming model of the enterprise, and identify the underlying structures as in FIG. 1. This is accomplished in the step circumscripted by block 100. A strictly feasible point is then selected either through a computation performed on the designed system or, more commonly, through sensors that communicate the existing state of the system to be optimized to the process. This step, which is depicted by block 101, includes identification of the initial allocations of the master problem only.

In order to proceed, an optimal allocation x of the resource initially allocated to the subproblems is needed. The computation of this optimal allocation of these resources is carried out (using whatever algorithm is most convenient, such as either Simplex or Special Simplex algorithms) in block 102. The balance of FIG. 4, contained in dashed box 103, is the iterative portion of the procedure of the present invention.

Iterative procedure 103 of FIG. 4 comprises the following steps. Given a feasible allocation of the components y, and the associated optimal allocations x in each subsystem:

(1) In box 104, recalculate the optimal dual values so that the projected direction of move becomes a descent direction;

(2) In box 105, determine the descent direction from the optimal dual values according to equation (6) and calculate the dual for the master problem by equation (7);

(3) In box 106, test the current values of the descent direction and examine if the magnitudes satisfy the relationship (8);

(4) If the magnitude test is satisfied, terminate in box 110 and assign the last available allocations set (the various $x_i$) to the subsystems;

(5) If the magnitude test is not satisfied, perform the line search in accordance with equation (9) in box 107;

(6) After the line search in box 107, change the allocation values of y in accordance with equation (12) in box 109;

(7) Given the new allocation values y, change the subsystem allocation x and obtain the dual values for x in box 110, and reenter box 104.

The above-described method converges quickly because large steps are possible as in the original Karmarkar method. Moreover, each Karmarkar step is expected to be faster (computationally) than the straightforward application of the Karmarkar method because the size of the master problem is much smaller. Line search procedure is also efficiently performed using the specialized dual Simplex algorithms.

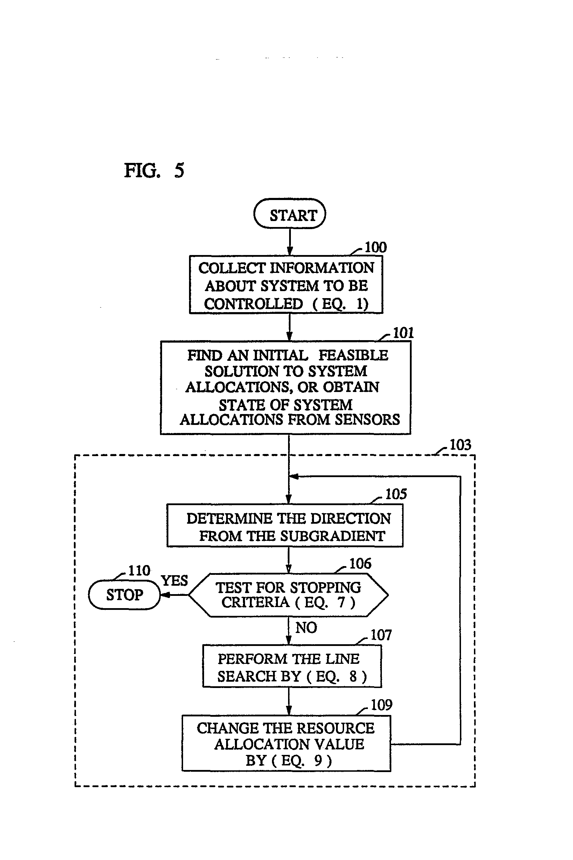

The FIG. 5 process includes most of the steps that are found in the FIG. 4 process. What is not needed is to evaluate the optimized allocations of the subsystems. Thus, the FIG. 5 process includes, in order, a step 100 which collects the information about the system to be optimized, a step 101 which obtains an initial feasible state of allocations, and an iterative step 103. Step 103 includes a step 105 to determine a descent direction, and a step 106 for testing whether additional iterative resource assignments are required. If additional iterative assignments are not required, step 103 terminates, and the last evaluated resource allocations are assigned to the system to be optimized in step 110. Otherwise, step 107 is performed which performs a line search to find a next resource allocations state, and that next state is evaluated in step 109. Control then returns to step 105.

## Claims

1. A method for allocating industrial resources of an enterprise so as to reduce the cost associated with a selected allocation of said resources, where

controllable parameters of said enterprise are expressed in terms of variables,

said allocation of said resources is linearly constrained and expressed by a set of linear equations in said variables, and

said cost is expressed in terms of a given piece-wise linear convex function of said variables,

said method comprising resources allocation iterations, where each iteration receives a potential resources allocation having

      1) an associated cost vector and

      2) a marginal worth vector that includes vector components and each component corresponds to a rate of change indication in said cost in consequence of a relaxation in one of said linear constraints by a fixed amount, where said each iteration develops a potential resources allocation for the next iteration as long as a selected stopping criterion is not met, each iteration further COMPRISING THE STEPS OF:

developing a descent direction vector associated with said potential resources allocation for use in creating said new potential resources allocation for the next iteration;

developing said marginal worth vector associated with said potential resources allocation;

testing said descent direction vector and said marginal worth vector to develop a process-stop signal when said descent direction vector falls below a first preselected threshold and said marginal worth vector satisfies a preselected set of linear inequalities;

developing said new potential resources allocation for the next iteration when said step of testing fails to produce said process-stop signal, by progressing along said descent direction vector until either a determination is made that the cost stops descending or until said new potential resources allocation approaches one of said constraints.

2. A method for allocating industrial resources of an enterprise so as to reduce the cost associated with a selected allocation of said resources, where

controllable parameters of said enterprise are expressed in terms of variables,

said allocation of said resources is linearly constrained and expressed by a set of linear equations in said variables and decomposable into a master subset, representing a correlating component of said enterprise, and a plurality of subsystem subsets, where each subsystem subset represents a relatively independent subentity of said enterprise and is a collection of constraint relationships, each of which is independent of a given set of said variables and said master subset is a collection of constraint relationships that interrelate said subsystem subsets, and

said cost is expressed in terms of a linear function of said variables, said method comprising resources allocation iterations, where each iteration receives a potential resources allocation of both said correlating component of said enterprise and of said subentities of said enterprise, said resources allocation having

      1) an associated cost vector

      2) a marginal worth vector for each of said subentities that includes vector components and each of said vector component corresponds to a rate of change indication in said cost in consequence of a relaxation by a fixed amount in one of said linear constraint relationships of said subentity, and

      3) an overall marginal worth vector for said correlating component that aggregates said marginal worth vectors of said subentities,

where said each iteration develops a potential resources allocation for the next iteration as long as a selected stopping criterion is not met, each iteration further COMPRISING THE STEPS OF:

developing said marginal worth vector associated with said potential resources allocation of said subentities;

developing a descent direction vector associated with said potential resources allocation of said subentities for use in creating said new potential resources allocation for the next iteration;

developing said overall marginal worth vector based on said step of developing said marginal worth vectors;

testing said descent direction vector and said overall marginal worth vector to develop a process-stop signal when said descent direction vector falls below a first preselected threshold and said overall marginal worth vector satisfies a preselected set of linear inequalities;

developing said new potential resources allocation for the next iteration when said step of testing fails to produce said process-stop signal, by progressing along said descent direction vector until either a determination is made that the cost stops descending or until said new potential resources allocation approaches one of said constraints.

FIG. 1

FIG. 2

FIG. 3

FIG. 4

START

COLLECT INFORMATION ABOUT
THE SYSTEM TO BE
CONTROLLED ( EQ. 1 )
— 100

FIND AN INITIAL FEASIBLE
SOLUTION TO RESOURCE
ALLOCATIONS OR OBTAIN
STATE OF SYSTEM ALLOCATIONS
FROM SENSORS
— 101

SOLVE THE SUBSYSTEM
ALLOCATIONS FOR THE
GIVEN ALLOCATIONS ( EQ. 3 )
— 102

— 103

CALCULATE OPTIMAL
DUAL VALUES IN EACH
SUBPROBLEM BY ( EQ. 4 )
— 104

DETERMINE THE DIRECTION
OF MOVE FROM THE DUAL
VALUES ( EQ. 5 ) AND
CALCULATE THE DUAL OF
MASTER SYSTEM ( EQ. 6 )
— 105

STOP
— 110

YES

TEST FOR STOPPING
CRITERIA ( EQ. 7 )
— 106

NO

PERFORM THE LINE
SEARCH ( EQ. 8 )
— 107

CHANGE THE RESOURCE
ALLOCATION VALUE ( EQ. 9 )
— 109

FIG. 5

```
                        ( START )
                            |
                            v
              ┌─────────────────────────┐ ⟋100
              │  COLLECT INFORMATION    │
              │  ABOUT SYSTEM TO BE     │
              │  CONTROLLED ( EQ. 1)    │
              └─────────────────────────┘
                            |
                            v
              ┌─────────────────────────┐ ⟋101
              │  FIND AN INITIAL FEASIBLE│
              │  SOLUTION TO SYSTEM     │
              │  ALLOCATIONS, OR OBTAIN │
              │  STATE OF SYSTEM        │
              │  ALLOCATIONS FROM SENSORS│
              └─────────────────────────┘
                            |                    ⟋103
         ┌ ─ ─ ─ ─ ─ ─ ─ ─ ─│─ ─ ─ ─ ─ ─ ─ ─ ─ ─ ─ ┐
         │                  v                         │
         │    ┌─────────────────────────┐ ⟋105        │
         │    │  DETERMINE THE DIRECTION │             │
         │    │  FROM THE SUBGRADIENT    │             │
         │    └─────────────────────────┘             │
    110  │                  |                          │
  ( STOP )◄── YES ─ < TEST FOR STOPPING >  ⟋106        │
         │            < CRITERIA ( EQ. 7 ) >           │
         │                  |                          │
         │                 NO                          │
         │                  v                 ⟋107     │
         │    ┌─────────────────────────┐              │
         │    │  PERFORM THE LINE        │             │
         │    │  SEARCH BY ( EQ. 8 )     │             │
         │    └─────────────────────────┘             │
         │                  |                 ⟋109     │
         │                  v                          │
         │    ┌─────────────────────────┐              │
         │    │  CHANGE THE RESOURCE     │─────────────┘
         │    │  ALLOCATION VALUE        │
         │    │  BY ( EQ. 9 )            │
         │    └─────────────────────────┘
         └ ─ ─ ─ ─ ─ ─ ─ ─ ─ ─ ─ ─ ─ ─ ─ ─ ─ ─ ─ ─ ─ ─
```